(19) Europäisches Patentamt
European Patent Office
Office européen des brevets

(11) **EP 3 050 152 B1**

(12) **EUROPEAN PATENT SPECIFICATION**

(45) Date of publication and mention
of the grant of the patent:
**07.11.2018 Bulletin 2018/45**

(51) Int Cl.:
*H01M 10/34* *(2006.01)*    *H01M 10/38* *(2006.01)*
*H01M 4/32* *(2006.01)*    *H01M 4/38* *(2006.01)*
*H01M 4/58* *(2010.01)*    *H01M 4/64* *(2006.01)*

(21) Application number: **14846022.3**

(22) Date of filing: **23.09.2014**

(86) International application number:
**PCT/US2014/056952**

(87) International publication number:
**WO 2015/042573 (26.03.2015 Gazette 2015/12)**

(54) **A HIGH EFFICIENCY NICKEL-IRON BATTERY**

HOCHEFFIZIENTER NICKEL-EISEN-AKKUMULATOR

BATTERIE AU FER-NICKEL À HAUTE EFFICACITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.09.2013 US 201361960645 P
23.09.2013 US 201361960653 P**

(43) Date of publication of application:
**03.08.2016 Bulletin 2016/31**

(73) Proprietor: **University of Southern California
Los Angeles, CA 90015 (US)**

(72) Inventors:
• **NARAYAN, Sri R.
Arcadia, California 91006 (US)**
• **MANOHAR, Aswin
Los Angeles, California 90007 (US)**

• **YANG, Chenguang
Arcadia, California 91007 (US)**
• **PRAKASH, Surya G.K.
Hacienda Heights, California 91745 (US)**
• **ANISZFELD, Robert
Los Angeles, California 90064 (US)**

(74) Representative: **GPI & Associés
EuroParc de Pichaury
Bâtiment B2 - 1er Etage
1330, rue Guillibert de la Lauzière
13856 Aix-en-Provence Cedex 3 (FR)**

(56) References cited:
**WO-A2-2012/012731    WO-A2-2012/174433
JP-A- H0 714 575    JP-A- S5 288 738
US-A- 3 849 198    US-A- 6 150 056
US-A1- 2011 027 666**

**Description**

CROSS-REFERENCE TO RELATED APPLICATIONS

STATEMENT REGARDING FEDERALLY SPONSORED

RESEARCH OR DEVELOPMENT

The invention was made with Government support under Contract No. DEAR0000136 awarded by the Advanced Research Projects Agency-Energy - U.S. Department of Energy. The Government has certain rights to the invention.

TECHNICAL FIELD

In at least one aspect, the present invention relates to iron electrodes for rechargeable batteries.

BACKGROUND

Highly efficient, robust, and scalable electrical energy storage systems are needed to accommodate the intrinsic variability and intermittency of the electricity generated from solar and wind resources. Such energy storage systems will retain the energy during periods of excess production, and release the energy during periods of increased electricity demand. Rechargeable batteries are particularly suitable for this application because of their scalability, energy efficiency, and their flexibility to being sited almost anywhere. While many rechargeable battery systems are available commercially and are being tested for large-scale energy storage applications, almost none of them are sufficiently robust or cost-effective to meet the growing market needs of load leveling, peak shaving and micro-grids. Therefore, the deployment of viable systems for large-scale electrical energy storage continues to be a challenge.

Commercially available iron-based batteries are based on a fairly robust technology developed in the 1940s. These batteries use iron electrodes with a charging efficiency of 70%. Consequently the batteries have to be overcharged by about 100% to achieve full charge. However, these batteries cannot be discharged sooner than about five hours. To achieve the required performance levels, the batteries include five times the required capacity in the electrodes. Such over-sizing of the electrodes reduces the mass-specific energy and thereby increasing the cost per kilowatt-hour of energy stored. The low charging efficiency of the iron electrode has continued to be an issue since the earliest reports on the use of the iron electrode. The parasitic reaction of hydrogen evolution lowers the round-trip energy efficiency of the battery and results in loss of water from the electrolyte. Therefore, the complete suppression of the hydrogen evolution during charging, or a charging efficiency of almost 100%, is crucial to the large-scale implementation of iron-based batteries.

Accordingly, there is a need for improved battery that are more efficient to operate.

SUMMARY OF THE INVENTION

The present invention solves one or more problems of the prior art by providing in at least one embodiment a rechargeable battery having an iron electrode. The rechargeable battery includes an iron electrode comprising carbonyl iron composition dispersed over a fibrous electrically conductive substrate. The carbonyl iron composition includes carbonyl iron and iron sulfide powder and bismuth oxide powder. A counter-electrode is spaced from the iron electrode. An electrolyte is in contact with the iron electrode and the counter-electrode such that during discharge iron in the iron electrode is oxidized with reduction occurring at the counter-electrode such that an electric potential develops. During charging, iron oxides and hydroxides in the iron electrode are reduced with oxidation occurring at the counter-electrode

In still another embodiment, a method for forming an iron electrode is provided. The method includes a step of combining carbonyl iron powder with at least one additive to create an electrode-forming blend. A metallic mesh is coated with the electrode-forming blend. The electrode-forming blend is sintered under an oxygen-free atmosphere to form the iron electrode.

In still another embodiment, a method for forming an iron electrode is provided. The method includes a step of combining carbonyl iron having an oxide content that is less than about 0.3 weight percent with one or more additives and an optional binder to form an electrode-forming blend. Characteristically, the carbonyl iron has iron particles with an average particle size from about 2 to 5 microns. The electrode-forming blend is introduced into the mold having a nickel or nickel-coated mesh positioned therein. The electrode-forming blend is pressed at a temperature of 140°-180°C under a pressure of 50 to 200 psi to form an iron electrode with the mesh impregnated therein.

In still another embodiment, a method for forming an iron electrode is provided. The method includes a step of combining carbonyl iron having an oxide content that is less than about 0.3 weight percent with one or more additives and an optional binder to form an electrode-forming blend. Characteristically, the carbonyl iron has iron particles with an average particle size from about 2 to 5 microns. The electrode-forming blend is wrapped with a nickel or nickel-coated mesh to form a wrapped structure. The wrapped structure is flattened to form a pocket holding the carbonyl iron particles along with the additives.

In still another embodiment, a method for forming an iron electrode is provided. The method includes a step of combining carbonyl iron and at least one additive to from an electrode-forming blend. The electrode-forming blend is applied to a nickel mesh to form an iron pre-electrode. The iron pre-electrode is charged and discharged to form a cycleable iron electrode.

Other exemplary embodiments of the invention will become apparent from the detailed description provided hereinafter. It should be understood that the detailed description and specific examples, while disclosing exemplary embodiments of the invention, are intended for purposes of illustration only and are not intended to limit the scope of the invention.

BRIEF DESCRIPTION OF THE DRAWINGS

Exemplary embodiments of the present invention will become more fully understood from the detailed description and the accompanying drawings, wherein:

FIGURE 1 is a schematic illustration of a battery including an embodiment of an iron electrode.

FIGURE 2 is a schematic illustration of a battery including an embodiment of an iron electrode.

FIGURE 3. Charge and discharge curve for the nickel-iron battery demonstrating high charge efficiency.

FIGURE 4. Charging efficiency as a function of cycling at C/2 rate of charge and C/20 rate of discharge. The band refers to the charging efficiency of state-of-art commercial iron electrodes from commercial nickel-iron batteries.

FIGURE 5. Discharge capacity of iron electrodes as function of the normalized discharge rate. Normalized discharge rate expressed as 1/n times the nominal capacity in Ampere-hours, where n is the number of hours of discharge (for e.g., 1/n= 0.5 corresponds to discharge in two hours of the entire capacity).

FIGURE 6A. Charging efficiency of a commercial iron electrode and carbonyl iron electrodes with bismuth oxide and iron sulfide as an electrode additive.

FIGURE 6B. Variation of charging efficiency of a carbonyl iron electrode containing bismuth oxide and iron sulfide with repeated cycling. Note that cycles 9 to 11 were dedicated to rate-capability measurements and hence charging efficiency data was not collected.

FIGURE 7A. Galvanostatic electro-reduction of bismuth oxide electrode in 30% potassium hydroxide electrolyte.

FIGURE 7B. X- ray diffraction (XRD) pattern for the bismuth oxide electrode after reduction of FIGURE 7A.

FIGURE 8A. XRD pattern for the carbonyl iron electrode containing different amounts of bismuth oxide 5 w/w%.

FIGURE 8B. XRD pattern for the carbonyl iron electrode containing different amounts of bismuth oxide 10 w/w%.

FIGURES 9A-F. Scanning electron micrographs (SEM) of iron particles with different additives in 30% potassium hydroxide electrolyte. (A, B) carbonyl iron, (C,D) carbonyl iron and iron sulfide, (E, F) carbonyl iron and bismuth oxide.

FIGURE 10. Cathodic Tafel polarization plots for fully-charged pressed plate iron electrodes of various compositions in 30 w/v% potassium hydroxide.

FIGURES 11A and 11B. Discharge capacity of iron electrodes as function of the normalized discharge rate.

FIGURE 12. Anodic polarization curve for a fully charged pressed plate iron electrode with different compositions in 30 w/v% potassium hydroxide at a scan rate of 0.17 mV s-1.

FIGURE 13. XRD pattern for the pressed plate carbonyl iron electrode modified with bismuth oxide and with sodium sulfide added to the electrolyte after extended cycling.

FIGURE 14 provides potential-charge curves measured on pressed plate carbonyl iron electrodes with iron sulfide additive showing the effect of 1% and 5% iron sulfide on discharge properties.

FIGURE 15 provides a bar chart that compares the discharge capacity of a pressed plate iron electrode with and without pore former additive.

FIGURE 16 provides the discharge capacity of a pressed plate carbonyl iron electrode modified with FeS at different discharge rates.

FIGURE 17 is a bar chart that provides a comparison of the relative rates of hydrogen evolution with a commercial electrode and a pressed plate carbonyl iron electrode in the presence of bismuth additives.

FIGURE 18 provides a comparison of durability of pressed plate iron electrodes with and without an iron sulfide additive.

FIGURE 19 provides a comparison of fabricated characteristics of carbonyl iron electrode with pore-forming and sulfide additives.

FIGURE 20 provides a plot of the discharge capacity versus the number of cycles for a flattened pocket plate iron electrode.

FIGURE 21 provides a plot of the discharge capacity for an electrode in which steel wool is included to interconnect the iron particles.

FIGURE 22 provides a plot of the discharge capacity of a sintered electrode.

FIGURE 23 provides a plot of the discharge capacity for a microwave sintered iron electrode with carbonyl iron.

FIGURE 24 provides a plot of the discharging capacity in which steel wool is also included in the microwave sintered iron electrodes to interconnect the iron particles and serve as a current collector in the electrode.

FIGURE 25 provides a plot of the discharge capacity a sintered iron electrode with iron (II) sulfide at different discharge rates.

FIGURE 26 provides a plot of the discharge capacity for a sintered iron electrode modified with iron (II) sulfide during prolonged charge/discharge cycling to demonstrate its durability.

FIGURE 27 provides a plot of the discharge capacity for this example having a pore-forming agent.

FIGURE 28 provides a plot of the discharge capacity for this example having a pore-forming agent and a carbon additive.

FIGURE 29 provides a plot of the discharge capacity for this example having a pore-forming agent and an in situ carbon additive.

FIGURE 30 provides a plot of the discharge capacity versus electrode porosity.

FIGURE 31 provides a scanning electron micrograph of silica micro-beads used to prepare porous iron electrodes.

FIGURE 32 provides a plot of the discharge capacity for an electrode prepared from carbonyl iron powder, pore-former, additives to reduce passivation, and steel wool.

FIGURE 33 provides a plot of discharge capacity from a Ni-Fe cell using an iron electrode prepared with carbonyl iron and iron sulfide additive.

FIGURE 34 provides charge-discharge curves from a Ni-Fe cell with carbonyl iron electrode and iron sulfide additive.

FIGURE 35 provides plots for the performance of a Ni-Fe Cell at different discharge rates.

FIGURE 36 provides a plot of the discharge capacity for a Ni-Fe Cell with a sintered iron electrode made from carbonyl iron, ammonium carbonate or ammonium bicarbonate, iron (II) sulfide, and conductive carbon additive.

FIGURE 37 provides a plot of the discharge capacity for a nickel foam electrode.

FIGURE 38 provides a plot of the discharge capacity for a nickel foam electrode containing carbon additives.

## DETAILED DESCRIPTION OF THE PREFERRED EMBODIMENT(S)

Reference will now be made in detail to presently preferred compositions, embodiments and methods of the present invention, which constitute the best modes of practicing the invention presently known to the inventors. The Figures are not necessarily to scale. However, it is to be understood that the disclosed embodiments are merely exemplary of the invention that may be embodied in various and alternative forms. Therefore, specific details disclosed herein are not to be interpreted as limiting, but merely as a representative basis for any aspect of the invention and/or as a representative basis for teaching one skilled in the art to variously employ the present invention.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the term "polymer" includes "oligomer," "copolymer," "terpolymer," "block," "random," "segmented block," and the like; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies *mutatis mutandis* to normal grammatical variations of the initially defined abbreviation; and, unless expressly stated to the contrary, measurement of a property is determined by the same technique as previously or later referenced for the same property.

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

It must also be noted that, as used in the specification and the appended claims, the singular form "a," "an," and "the" comprise plural referents unless the context clearly indicates otherwise. For example, reference to a component in the singular is intended to comprise a plurality of components.

With reference to Figure 1, a schematic illustration of a nickel-iron battery that incorporates the iron electrodes of the present invention is provided. Battery 10 includes battery container 12 which holds liquid electrolyte 14. Typically, electrolyte 14 is an alkaline aqueous solution, and in particular, an aqueous potassium hydroxide solution. Iron electrode 16 and nickel electrode 18, which is spaced apart from the iron electrode, are immersed in electrolyte 14. The iron electrode includes metallic iron and iron oxides and hydroxides while the nickel electrode include nickel oxide (or nickel hydroxide) and nickel oxyhydride depending on the degree of charging or discharging of the battery. Moreover, nickel electrode 18 sustains oxidation and reduction of nickel hydroxide ($Ni(OH)_2$) and nickel oxyhydroxide ($NiOOH$), respectively. In some variations, nickel electrode 18 includes a nickel foam incorporating the nickel hydroxide and nickel oxyhydroxide. The half reactions for the electrodes of rechargeable battery 10 are as follows:

$$(+) \text{ Electrode: } 2NiOOH + 2H_2O + 2e^- \leftrightarrow 2\,Ni(OH)_2 + 2OH^-$$

$$(-) \text{ Electrode: } Fe + 2OH^- \leftrightarrow Fe(OH)_2 + 2e^-$$

Discharging occurs in the direction from left to right while charging occurs in the direction from right to left.

With reference to Figure 2, a schematic perspective view of an iron-air battery. Iron-air rechargeable battery 20 includes battery container 22 which holds liquid electrolyte 24. Typically, electrolyte 24 is an alkaline aqueous solution, and in particular, an aqueous potassium hydroxide solution. Iron electrode 26 and air electrode 28, which is spaced apart from the iron electrode, are immersed in electrolyte 24. The iron electrode includes metallic iron and iron oxides and hydroxides depending on the charging state of the battery. Air electrode 28 includes structured catalyst layer 32 disposed over, and typically contacting, gas diffusion backing 34. During operation, air is supplied to air electrode 28.

Additional details of a useful iron-air battery are forth in U.S. Pat. No. 8,758,948; the entire disclosure of which is hereby incorporated by reference. The overall cell reaction in an iron-air battery that leads to generation of electrical energy is given the following equation:

$$Fe + \tfrac{1}{2} O_2 + H_2O \leftrightarrow Fe(OH)_2$$

The backward reaction in this equation takes place during charging. During discharge, iron on the negative electrode is oxidized to iron (II) hydroxide and oxygen is reduced at the positive electrode to form water and hydroxides. These processes are reversed during charging of the battery. The individual electrode reactions during discharge are given by:

$$(+) \text{ Electrode: } \tfrac{1}{2} O_2 + H_2O + 2e^- \leftrightarrow 2OH^-;$$

$$(-) \text{ Electrode: } Fe + 2OH^- \leftrightarrow Fe(OH)_2 + 2e^-$$

In each of the battery designs set forth above, the following hydrogen evolution reactions degrades battery performance:

$$Fe + 2H_2O \rightarrow Fe(OH)_2 + H_2$$

$$2H_2O + 2e^- \leftrightarrow H_2 + 2OH^-$$

Embodiments of the invention set forth below seek to diminish the effects of these parasitic reactions.

In a variation of the batteries set forth above, the electrolyte includes a mixture of potassium hydroxide and lithium hydroxide. In a refinement, the concentration of potassium hydroxide from 2.5 to 35 weight percent of the total weight of the electrolyte and the lithium hydroxide is from 0.1 to 1 weight percent of the total weight of the electrolyte. In a refinement, the electrolyte includes sodium sulfide, potassium sulfide, or a combination thereof as an additive since these compounds are soluble in the electrolyte. Typically, such electrolyte additives are in the range of 1-5 g/l.

In a variation, iron electrode 16 and/or iron electrode 26includes a carbonyl iron composition for inclusion in the rechargeable batteries of Figures 1 and 2. The carbonyl iron composition includes carbonyl iron particles dispersed over a fibrous electrically conductive substrate. Characteristically, the carbonyl iron composition includes carbonyl iron and at least one additive. Additives are used to provide various functions such as reducing passivation during discharge, generating porosity and specific discharge capacity, achieving capability to charge and discharge at high-rates, achieving high efficiency without hydrogen evolution during charge and stand, stabilizing capacity over hundreds of cycles, increase the rate of formation of the electrode. Examples of useful, additives include, but are not limited to, bismuth oxide, sodium bismuth oxide, bismuthsulfide, copper sulfide, nickel sulfide, zinc sulfide, lead sulfide, mercury sulfide, indium sulfide, gallium sulfide, tin sulfide, and combinations thereof. Iron sulfide (FeS) is found to be particularly useful. In a refinement, the additive individually, and in particular iron sulfide when used, is present in an amount from about 1 to 10 weight percent of the total weight of the carbonyl iron composition. In another refinement, the additive individually, and in particular iron sulfide when used, is present in an amount from about 2 to 8 weight percent of the total weight of the carbonyl iron composition. In other refinements, the additive individually, and in particular iron sulfide when used, is present in an amount of at least, 1 weight %, 2 weight %, 3 weight %, 4 weight %, or 1 weight % of the total weight of the carbonyl iron composition. In still other refinements, the additive individually, and in particular iron sulfide when used, is present in an amount of at most, 12 weight %, 10 weight %, 8 weight %, 7 weight %, or 6 weight % of the total weight of the carbonyl iron composition. In a refinement, the iron carbonyl composition includes iron sulfides in these amounts while being substantially free of bismuth, lead, mercury, indium, gallium, and tin atoms. In a further refinement, the iron carbonyl composition includes iron sulfides in these amounts while being substantially free of bismuth atoms. In this context substantially free means that the amount of these atoms is less than, in increasing order of preference, 0.2 weight percent, 0.2 weight percent, 0.1 weight percent, 0.05 weight percent, or 0.01 weight percent.

In a refinement, the fibrous electrically conductive substrate includes a plurality of iron-containing filaments. Steel wool is an example of such a substrate. The iron electrode typically includes a metallic mesh (e.g., a nickel or nickel plated mesh) over which the carbonyl iron composition is disposed. In a variation, the carbonyl iron composition advantageously has a porosity from about 30 to 70 volume percent or from about 40 to 60 volume percent or from about 45 to 55 volume percent. As used herein, "porosity" means the present volume of a sample that is pores, i.e., empty space. In a refinement, iron electrode 16 and/or iron electrode 26 of Figures 1 and 2 also includes a polymeric binder such as polyethylene, PVDF, and the like. In a refinement, the binder is in an amount of 5 to 20 weight percent of the total weight of the electrode.

The iron electrode can be fabricated by the pressed plate, pocket plate, or by sintering techniques as set forth below in more detail. Sintering results in carbonyl iron particles fused together by sintering with carbonyl iron particles connected by regions of sintered material thereby defining a plurality of interconnected pores. In one variation, microwave sintering is used. In another variation, a 3-dimensional layer-by-layer sintering technique is used to build the iron electrode. Such techniques can lower cost and allow tailoring of the electrode structures. Moreover, these techniques allow a predetermined value of the porosity (e.g., 30-70 percent) to be accomplished unlike most prior art sintering that produces dense materials. Examples of these 3-dimensional techniques include, but are not limited to, laser sintering and electron beam sintering.

In another embodiment, a method for manufacturing the iron electrode for use in the rechargeable batteries of Figures 1 and 2 is provided. The method includes a step of combining carbonyl iron powder with at least one additive to create an electrode-forming blend. A metallic mesh is then coated with the electrode-forming blend. In a refinement, the electrode forming blend is combined with a fibrous electrically conductive substrate such as steel wool (e.g., Grade #0000 Superfine or #0 made by Rhodes American). The electrode-forming blend is sintered under an oxygen-free atmosphere to form the iron electrode. In one variation, the electrode-forming blend is thermally sintered typically at a temperature from 700 to 1000 °C. Advantageously, the time period of heating limits the degree of sintering and therefore the amount of porosity (e.g., 30 to 70 percent). Typically, a time period of heating is from 10 minutes to 2 hours with longer time periods resulting in lower porosities. In another variation, the electrode-forming blend is sintered by microwave radiation. In still another variation, the electrode-forming blend is sintered by a 3-dimensional technique as set forth above. In order to avoid the formation of undesirable oxides over the iron particles, the electrode-forming blend is purged with a gas that does not include oxygen atoms (does not have molecular oxygen or water) during sintering. As set forth above, Examples of useful, additives include, but are not limited to, bismuth oxide, sodium bismuth oxide, bismuth sulfide, copper sulfide, nickel sulfide, zinc sulfide, lead sulfide, mercury sulfide, indium sulfide, gallium sulfide, tin sulfide, and combinations thereof. Iron sulfide (FeS) is found to be particularly useful. In a refinement, the additive individually, and in particular iron sulfide when used, is present in an amount from about 1 to 10 weight percent of the total weight of the electrode-forming blend. In another refinement, the additive individually, and in particular iron sulfide when used, is present in an amount from about 2 to 8 weight percent of the total weight of the electrode-forming blend. In other refinements, the additive individually, and in particular iron sulfide when used, is present in an amount of at least, 1 weight %, 2 weight %, 3 weight %, 4 weight %, or 1 weight % of the total weight of the electrode-forming blend. In still other refinements, the additive individually, and in particular iron sulfide when used, is present in an amount of at most, 12 weight %, 10 weight %, 8 weight %, 7 weight %, or 6 weight % of the total weight of the electrode-forming blend. In a particularly useful variation, the electrode-forming blend further includes a pore-forming agent so that the iron electrode achieves the porosities set forth above. Examples suitable pore-forming agents include, but are not limited to potassium carbonate, sodium carbonate, sodium bicarbonate, potassium bicarbonate, ammonium bicarbonate, ammonium carbonate, and combinations thereof. In still another variation, the electrode-forming blend further includes silica micro-beads In a refinement, the silica micro-beads has an average diameter from about 10 to 25 microns. When silica micro-beads are used, the method further includes a step of dissolving the silica micro-beads to increase the porosity of the iron electrode. In yet another variation, the electrode-forming blend further includes an electrically conductive carbon such as acetylene black, graphite, graphite nanofibers, carbon nanotubes, and combinations thereof. In another refinement, the method further includes a step of incorporating the iron electrode into a battery. In still another refinement, the method further includes a step of subjecting the battery for several charge and discharge cycles to dissolve the pore-forming agent..

In another embodiment, a method for forming pressed plate iron electrodes for incorporation in the rechargeable batteries of Figures 1 and 2 is provided. The method includes a step of combining iron carbonyl having an oxide content that is less than about 0.3 weight percent with one or more additives to form an electrode-forming blend. In a refinement, the electrode-forming blend also includes a polymeric binder such as polyethylene, PVDF, and the like. In a refinement, the binder is in an amount of 5 to 20 weight percent of the total weight of the electrode forming blend. Typically, the iron carbonyl includes particles having an average particle size from about 2-5 microns. In a refinement, the electrode-forming blend also includes a polymeric binder such as polyethylene, PVDF, and the like. In a refinement, the binder is in an amount of 5 to 20 weight percent of the total weight of the electrode forming blend. The electrode-forming blend is introduced into a mold having a nickel or nickel-coated mesh positioned therein. The electrode-forming blend is pressed at a temperature from 140 °C to 180 °C under a pressure of 50-200 psi to form an iron electrode with the mesh impregnated therein. As set forth above, Examples of useful, additives include, but are not limited to, bismuth oxide, sodium bismuth oxide, bismuth sulfide, copper sulfide, nickel sulfide, zinc sulfide, lead sulfide, mercury sulfide, indium sulfide, gallium sulfide, tin sulfide, and combinations thereof. Iron sulfide (FeS) is found to be particularly useful. In a refinement, the additive individually, and in particular iron sulfide when used, is present in an amount from about 1 to 10 weight percent of the total weight of the electrode-forming blend. In another refinement, the additive individually, and in particular iron sulfide when used, is present in an amount from about 2 to 8 weight percent of the total weight of the electrode-forming blend. In other refinements, the additive individually, and in particular iron sulfide when used, is present in an amount of at least, 1 weight %, 2 weight %, 3 weight %, 4 weight %, or 1 weight % of the total weight of the electrode-forming blend. In still other refinements, the additive individually, and in particular iron sulfide when used, is present in an amount of at most, 12 weight %, 10 weight %, 8 weight %, 7 weight %, or 6 weight % of the total weight of the electrode-forming blend. In a refinement when iron sulfide is used, the iron sulfide is ground to an average particle size is from about 15 to 35 microns. In a particularly useful variation, the electrode-forming blend further includes a pore-forming agent so that the iron electrode achieves the porosities set forth above. Examples suitable pore-forming agents include, but are not limited to potassium carbonate, sodium carbonate, sodium bicarbonate, potassium bicarbonate, ammonium bicarbonate, ammonium carbonate, and combinations thereof. In still another variation, the electrode-forming blend further includes silica micro-beads. In yet another variation, the electrode-forming blend further includes an electrically conductive carbon such as acetylene black, graphite, graphite nanofibers, carbon nanotubes, and combinations thereof. In a refinement, the silica micro-beads has an average diameter from about 10 to 25 microns. When silica micro-beads are used, the method further includes a step of dissolving the silica micro-beads to increase the porosity of the iron electrode. In another refinement, the method further includes a step of incorporating the iron electrode into a battery. In still another refinement, the method further includes a step of subjecting the battery for several charge and discharge cycles to dissolve the pore-forming agent.

In another embodiment, a method for fabricating a pocket plate electrode is provided. The method includes a step of combining iron carbonyl and at least one additive to from an electrode-forming blend. Typically, the electrode-forming blend further includes a polymeric binder. The electrode-forming blend is wrapped tightly with a nickel mesh to form an iron pre-electrode. The iron pre-electrode is subject of a plurality of charge and discharge cycles to form an iron electrode. The iron electrode is sometimes flattened after being prepared. In a variation, the electrode-forming blend further includes steel wool as set forth above.

Example **1**

The electrodes typically consisted of 81 w/w % carbonyl iron (SM grade BASF), 10 w/w % potassium carbonate and 9 w/w % polyethylene binder (MIPELON, Mitsui Chem USA). In yet another formulation, 5% of the carbonyl iron was substituted with bismuth sulfide (Aldrich). The powder mixture was spread on a degreased nickel grid and pressed at a temperature of 140 °C and a pressure of 5 kg cm$^{-2}$. The amount of iron in these electrodes corresponded to a calculated (theoretical) capacity of about 2 Ampere-hours. Commercial iron electrodes were obtained from nickel-iron batteries manufactured by Sichuan Changong Battery Co., and these electrodes consisted of magnetite and graphite, largely. The exact composition of these electrodes is not available. The iron electrodes were tested in a three - electrode cell. A nickel oxide battery electrode of the sintered type was used as the counter-electrode. A solution of potassium hydroxide (30 w/v %), similar that used in iron-based rechargeable batteries, was used as the electrolyte. All potentials were measured against a mercury/mercuric oxide (MMO) reference electrode ($E^o_{MMO}$= +0.098 V vs. the normal hydrogen electrode).

The charging efficiency, discharge rate capability, and the response to repeated charge/discharge cycling were measured with a 16-channel battery cycling system (MACCOR-4200). The steady-state polarization studies were conducted with a potentiostat/galvanostat (VMC-4, PAR Ametek).

The charging-efficiency was calculated as per the following:

$$\text{Charging Efficiency (\%)} = \{(Q_{charging} - Q_{H2}) / Q_{charging}\} \times 100$$

where $Q_{charging}$ is the total charge and $Q_{H2}$ is the charge used up in hydrogen evolution.

*Charging Efficiency.* Specifically, the charging efficiency of the carbonyl iron electrode without any additive was found to be 90 ± 1%. The electrodes formulated with carbonyl iron and bismuth sulfide showed an even higher charge efficiency of 96 ±1% . This high value of charge efficiency for the carbonyl iron electrode with bismuth sulfide represents a *ten-fold decrease* in the amount of hydrogen evolved during charging. Repeated cycling of these electrodes did not show any decline of this high value of charging efficiency. Figure 3 shows the performance of a nickel-iron battery on charge and discharge. The nearly equal capacity during charge and discharge verifies the >96% charge efficiency.

A further decrease in the rate of hydrogen evolution has been achieved by the addition of bismuth sulfide to the carbonyl iron material. Bismuth sulfide is an electrically conducting solid, insoluble in the potassium hydroxide electrolyte. During charging, the bismuth sulfide is transformed into elemental bismuth as follows:

$$Bi_2S_3 + 6e^- \leftrightarrows 2Bi + 3S^{2-} \quad E^0 = -0.818V$$

The electrode potential for the reduction of bismuth sulfide to bismuth is more positive than that of the iron electrode reaction and thus the charging process conducted at -1 V (vs NHE) facilitates the formation of elemental bismuth. The presence of elemental bismuth in the charged electrodes was confirmed by X-ray powder diffraction (XRD) studies. Figure 4 shows that the high charging efficiency was retained over at least 25 cycles.

*Discharge Rate Capability.* To meet the demands of large-scale energy storage, the batteries must be capable of being completely charged and discharged in one to two hours. The performance at different discharge rates is described by the term "rate-capability". The higher the rate-capability the smaller the battery required for a particular amount of stored energy. With the new carbonyl iron electrode containing bismuth sulfide, high discharge rate capability is achieved along with the improved charge efficiency. At a two-hour rate of discharge, the addition of bismuth sulfide we observe a twenty-fold increase in capacity compared to the commercial electrode and a fifty-fold increase compared to the plain carbonyl iron electrode (Figure 5). We also note that the specific mass loading of the commercial electrodes is approximately 8 times higher than that of the carbonyl electrodes. This higher loading could also contribute to the lower rate capability of the commercial electrodes.

The specific discharge capacity of the electrode with bismuth sulfide even at a one-hour discharge rate corresponds to about 60% of the maximum discharge capacity of the electrode. The commercial electrode yields almost no capacity at these high discharge rates. We attribute the excellent discharge rate capability of the electrodes formulated with bismuth sulfide to the *in situ* formation of iron sulfides. In the XRD measurements on cycled electrodes that incorporated bismuth sulfide, we were able to detect iron sulfide phases corresponding to $FeS$ and $Fe_3S_4$). We may infer that sulfide ions (from reduction of bismuth sulfide reacted with the iron (II) hydroxide to form iron (II) sulfide as follows:

$$S^{2-} + Fe(OH)_2 = FeS + 2\ OH^-$$

The iron (II) sulfide can react with sulfide ions to form various mixed-valence iron sulfides that are electronically conductive like iron (II) sulfide. The *in situ* incorporation of such electronically conductive iron sulfides will counter the passivation caused by the discharge product, iron (II) hydroxide, an electronic insulator.

Thus, the iron sulfide compounds maintain the electronic conductivity at the interface allowing the discharge reaction to be sustained at high rates. This is supported by previous work on the beneficial effect of sulfide additives. The high charging-efficiency of 96% combined with a high level of utilization of 0.3 Ah $g^{-1}$ and fast discharge capability for the iron electrode achieved in this work allows us to develop a very inexpensive and efficient iron electrode.

## Example 2

The iron electrodes studied here consisted of a mixture of carbonyl iron (SM grade BASF) powder, combined with potassium carbonate and polyethylene binder (Mitsui Chem USA). To assess the effect of bismuth oxide, iron electrodes containing 5 and 10 w/w % of bismuth oxide additive were studied. The powders of carbonyl iron, binder and bismuth oxide were mixed and spread on a degreased nickel grid and then pressed at a temperature of 140 °C at a pressure of 5 kg-cm$^{-2}$. The mass of iron in these electrodes was about 2 grams, which corresponded to a calculated (theoretical) capacity of about 2 Ampere-hours.

The iron electrodes were tested in a three - electrode electrochemical cell. The electrolyte was a solution of potassium hydroxide (30 w/v %), similar to that used in iron-based rechargeable alkaline batteries. A sintered nickel oxide battery electrode was used as the counter-electrode and a mercury/mercuric oxide (MMO) electrode ($E_{MMO}^o$= +0.098 V vs. the normal hydrogen electrode) was the reference electrode. Unless stated otherwise, all values of electrode potentials reported here are with reference to the MMO electrode. After fabrication, the iron electrodes were charged and discharged 30 to 40 times during which the electrode underwent "formation", after which a stable electrode capacity was achieved. Following formation, we determined the charging efficiency and the rate capability of the iron electrodes. Similarly, we have also determined the charging efficiency and the discharge rate capability of iron electrodes from commercially-available nickel-iron batteries (Sichuan Changong Battery Co., China). The charging efficiency and the electrode capacity at various discharge rates were measured using a 16-channel battery cycling system (MACCOR-4200) and a potentiostat/galvanostat (VMC-4, PAR Ametek). The charging efficiency of the iron electrode was determined by charging the electrode to its rated capacity at the C/2 rate and then discharging at the C/20 rate to a cut off potential of -0.75 V (Note: C is the rated capacity of the electrode in Ampere-hours, and C/n is the charge/discharge current in Amperes). The ratio of the discharge capacity to the input charge was calculated to be the charging efficiency. Steady-state polarization measurements were made with a potentiostat/galvanostat (VMC-4, PAR Ametek). X-ray Diffraction (XRD) data of electrode materials were obtained on a Rigaku Ultima IV (Cu K$\alpha$ source) Diffractometer.

In a separate set of experiments, carbonyl iron particles immersed in potassium hydroxide without any external polarization were studied. Approximately, 2 grams of carbonyl iron powder was exposed to about 30 ml of 30 w/v % solution of potassium hydroxide in a centrifuge tube. The solution was thoroughly de-aerated using argon and the tube was sealed. The iron powder was left in the electrolyte for a period of 30 days. In a similar experiment, 5 w/w % of the carbonyl iron was replaced with powders of either bismuth oxide or iron sulfide. Since it was impractical to collect the small amount of hydrogen generated in these tubes during the 30-day period, the rate of hydrogen release was noted qualitatively from the rate of bubble formation and release from the iron powder. At the end of the 30-day period, the surface morphology of the particles of iron powder was examined by scanning electron microscopy (JEOL JSM 7001).

*Charging Efficiency.* The charging efficiency of iron electrodes from the commercial nickel-iron batteries was determined to be about 70%. The in-house prepared carbonyl iron electrode without any additives had a significantly higher charging efficiency of 89% (Figure 6a) and the rate of hydrogen evolution during charging was five-fold smaller compared to the commercial iron electrode. This high value of charging efficiency for the carbonyl iron electrodes was attributed to the high purity of carbonyl iron. The carbonyl iron powder is manufactured by the decomposition of iron pentacarbonyl and the resulting iron does not have any impurities like magnesium, calcium etc., that are known to facilitate the hydrogen evolution reaction. As a result, the rate of hydrogen evolution on carbonyl iron based electrodes is very small compared to that of the commercial iron electrodes.

Since a goal is to attain a charging efficiency close to 100%, further improvement of the carbonyl iron electrode by using additives that selectively inhibited hydrogen evolution were utilized. Elements such as lead, cadmium, mercury and bismuth are known to exhibit the highest overpotentials for the hydrogen evolution reaction. Consequently, the addition of these elements has been considered to reduce hydrogen evolution rates. Various types of organo-sulfur compounds were found to be beneficial in suppressing the hydrogen evolution at the iron electrode. Among the inorganic additives, bismuth is relatively non-toxic and eco-friendly. We have recently reported the beneficial effect of bismuth sulfide as an additive on the charging efficiency of iron electrode. In the present invention, the effect of bismuth oxide as an electrode additive on the charging efficiency of the iron electrode was measured. With 5% of bismuth oxide as an additive, the charging efficiency of the carbonyl iron electrode was about 90% (Figure 6A). When the concentration of bismuth oxide in the iron electrode was raised to 10%, the charging efficiency improved to 92%. This value of charging efficiency was considerably higher than that of the commercial electrode at 70%. It was clear that the presence of bismuth oxide further improved the efficiency of the carbonyl iron electrode by suppressing the hydrogen evolution reaction. In addition, this high value of charging efficiency of the bismuth-oxide-modified iron electrode was found to be stable over at least 20 cycles of repeated charge and discharge (Figure 6B) suggesting the practical viability of using bismuth oxide for improving charging efficiency of the iron electrode.

*Electro-reduction of bismuth oxide to bismuth.* To investigate the changes that the bismuth oxide additive underwent during charging of the iron electrode, the electro-reduction of bismuth oxide without any iron active material were studied. In these electrodes, bismuth oxide was combined with a polyethylene binder and hot pressed onto a nickel grid. In another formulation, 12 w/w % of acetylene black was mixed with the bismuth oxide and the binder before hot pressing. These electrodes were polarized cathodically at a constant current of 500 mA ($0.33A\text{-}g^{-1}$) in the battery electrolyte. The potential-charge curves showed a well-defined plateau corresponding to the reduction of the bismuth oxide to elemental bismuth (Figure 7A). After the reduction of bismuth oxide was complete, hydrogen evolution was the only reaction that took place, as indicated by the inflection in the potential-charge curve (Figure 7A). The total charge input in the plateau region corresponded to the reduction of bismuth oxide to elemental bismuth as shown in the following equation:

$$Bi_2O_3 + 3H_2O + 6e^- \leftrightarrows 2Bi + 6OH^- \quad E^0 = -0.460V$$

When acetylene black was present in this electrode, the plateau potential was significantly closer to the electrode potential predicted from the Nernst equation (corrected for 5.36 M potassium hydroxide). The difference between the plateau potentials for the electro-reduction of bismuth oxide, with and without acetylene black, was about 500 mV. This higher overpotential for the reduction of bismuth oxide in the absence of acetylene black was due to the poor electronic conductivity of bismuth oxide. The ohmic resistance of the bismuth oxide electrode measured at 10 kHz (2 mV peak-to-peak AC signal) was 0.66 Ohm. With the addition of acetylene black, an electrically conductive carbon, the high-frequency resistance of the electrode reduced to 0.27 Ohm and the plateau potential approached the reversible potential for the bismuth oxide/bismuth couple XRD investigation of these electrodes confirmed the complete reduction of bismuth oxide to elemental bismuth (Figure 7B).

When bismuth oxide was present as an additive in the iron electrode, the high-frequency resistance of this electrode was similar to that of the electrode with just bismuth oxide and acetylene black because the iron particles provided a conductive matrix. Since the standard reduction potential for the bismuth oxide/bismuth couple is more positive to that for the reduction of iron (II) hydroxide to iron; the bismuth oxide was expected to undergo electro-reduction to elemental bismuthwhen an iron electrode was charged. The XRD measurements on iron electrodes modified with bismuth oxide that had been subjected to charging, confirmed the presence of elemental bismuth (Figures 8 A, B).

*Corrosion of iron particles.* In addition to performing the charging efficiency measurements on the iron electrode, the surface morphology of carbonyl iron powder exposed to a 30 w/v % solution of potassium hydroxide in the presence of various additives were also examined. The scanning electron micrographs of the iron particles obtained after 30 days of exposure to the electrolyte are shown in Figures 9A-9F. When carbonyl iron was exposed to potassium hydroxide electrolyte, the smooth particles of iron became rough and covered with iron hydroxide (Figure 9-A, B). Further, the generation of a considerable number of hydrogen bubbles that corresponded to the corrosion reaction were noticed.

$$Fe + 2H_2O \rightarrow Fe(OH)_2 + H_2$$

Similar corrosion was also noticed when carbonyl iron was mixed with iron sulfide. Iron sulfide is known to prevent the passivation of iron. As a result, it was not surprising that the corrosion of iron to iron (II) hydroxide was accelerated by the presence of iron sulfide (Figure 9-C, D).

In the presence of bismuth oxide however, the surface of the iron particles appeared to be smooth and did not seem to have suffered any corrosion by the alkaline medium (Figure 9-E, F). Also, no hydrogen bubbles were observed during the exposure period. Therefore, it was clear that the corrosion of iron was substantially inhibited by the deposition of bismuth according to

$$Bi_2O_3 + 3H_2O + 3Fe \rightarrow 2Bi + 3Fe(OH)_2$$

Also, once the bismuth was deposited, the formation of iron hydroxide ceased to occur. A similar experiment was also conducted with bismuth sulfide, and we did not observe any hydrogen evolution and the morphology of the carbonyl iron particles was similar to the case with bismuth oxide. Thus, we were able to confirm directly, the role of the elemental bismuth in preventing hydrogen evolution.

*Kinetic Parameters for Hydrogen Evolution.* To measure the effect of bismuth on the rate of hydrogen evolution, the kinetic parameters (exchange current and Tafel Slope) for the hydrogen evolution reaction on the carbonyl iron electrodes with the bismuth oxide additive were determined. Steady-state polarization data (Figure 10) was obtained on the iron electrode in the fully-charged state where the only reaction occurring during cathodic polarization was hydrogen evolution. The kinetic parameters were obtained by fitting the steady-state polarization data to the Tafel equation:

$$Log_{10}(I_{H2}/I_o) = (E - E_H^r)/b$$

where $I_o$ and $b$ are the exchange current and the Tafel slope, respectively. $E_H^r$ is the reversible electrode potential for the hydrogen evolution reaction in the battery electrolyte. $I_{H2}$ is the current associated with hydrogen evolution and the E is the electrode potential during cathodic polarization. The apparent exchange current was determined from the intercept of the Tafel line at zero overpotential. For comparing various electrodes, the exchange current was normalized to the discharge capacity of the electrodes, as the discharge capacity is proportional to the electrochemically-active area of the electrode.

The normalized exchange current decreased by a factor of six in the presence of 5% bismuth oxide and decreased even further when the concentration of bismuth oxide in the electrode was 10%. However, the normalized exchange current for the electrodes with the bismuth oxide additive was about 60% higher than that of the electrode with bismuth sulfide reported earlier by us. Such differences in normalized exchange current could arise from the differences in the morphology of bismuth formed by electrodeposition from bismuth oxide and bismuth sulfide particles that will affect the electrochemically-active area over which the bismuth is distributed. For example, the differences in the initial particle size of the additive could give rise to a different final distribution and morphology of bismuth. The slightly lower values of charging efficiency observed with bismuth oxide compared to bismuth sulfide were consistent with the higher normalized exchange current for hydrogen evolution observed on the bismuth oxide electrodes.

It was also found that the addition of iron sulfide to the bismuth oxide modified iron electrode did not change the kinetic parameters for hydrogen evolution significantly. Consistent with this finding, the charging efficiency of the iron electrode modified with bismuth oxide and iron sulfide was not different from the iron electrode with just the bismuth oxide additive (Figure 6A).

The Tafel slope of the unmodified carbonyl iron electrode was higher than that of the electrodes with bismuth oxide additive. The higher value of Tafel slope could be due to the resistance of the poorly-conducting oxide layer present on the iron electrode. Such high values of Tafel slopes for hydrogen evolution on film-covered electrodes have been reported for stainless steel and zirconium in alkaline media. For a conductive surface resulting from the deposition of bismuth, the Tafel slopes were substantially lower than on plain carbonyl iron. The similar values of Tafel slope for electrodes containing bismuth oxide and bismuth sulfide confirmed that a bismuth-covered surface was exposed to the solution on both these electrodes.

Using the values of exchange current and Tafel slope for hydrogen evolution on the various electrodes, the charge efficiency was calculated and compared these with the values obtained by direct measurement of discharge capacity (Figure 6A).

The charging efficiency was calculated using the following equation:

$$\text{Charging Efficiency (\%)} = \{(Q_{charging} - Q_{H2})/Q_{charging}\} \times 100$$

where $Q_{charging}$ was the total input charge and $Q_{H2}$ was the charge used up in hydrogen evolution.

$Q_{H2}$ was calculated from the cumulative value of the product of the time during charging and the hydrogen evolution current, $I_{H2}$, calculated from the Tafel relationship. The magnitude of $I_{H2}$ varies during charging since the electrode potential gradually becomes more negative during charging. The values of charging efficiency predicted from the kinetic parameters followed the same trend as the experimental values. Therefore, it was clear that the kinetics of hydrogen evolution was being modified to different extents by the various additives.

*Discharge Rate Capability.* For large-scale energy storage applications, the battery needs to respond rapidly to energy demand and should therefore be capable of being discharged at the C/1 rate (also termed the one-hour rate) or higher. From previous studies, we were aware that the discharge rate capability of the iron electrodes was limited to C/5 rate by the formation of a passive layer of iron (II) hydroxide during discharge. Thus, to achieve high discharge rates, the passivation of the iron electrode must be avoided. Therefore, we studied the passivation behavior of bismuth oxide containing iron electrodes with two types of "de-passivating" additives: (1) sodium sulfide at a concentration of 3.0 g/L in the electrolyte, and (2) 5 w/w % of iron sulfide added to the iron active material during electrode fabrication.

Electrodes with carbonyl iron or with just bismuth oxide exhibited very poor rate capability. Specifically, the bismuth-oxide-modified carbonyl iron electrode did not give any appreciable capacity at rates higher than C/5 (Figure 11A). However, when sodium sulfide was added to the electrolyte, the same electrode delivered 8 times greater capacity at the C/1 rate compared to the experiment without sodium sulfide (Figure 11B). Further, the addition of iron sulfide increased the delivered capacity by 18 times of that without any additive. The electrode containing bismuth oxide and iron sulfide could be discharged at 3C rate with an electrode utilization value of almost 0.2 Ah/g (Figure 11B). The 3C rate observed here is the highest discharge rate reported with iron electrodes, and makes the electrode highly suitable for supporting a wide range of power demands of grid-scale energy storage systems. We also note that the ability to discharge at such high rates did not compromise the charging characteristics in that the high charging efficiency of 92% was maintained.

To understand the enhanced discharge rate capability achieved with the sulfide containing electrodes, the passivation characteristics of various iron electrodes by potentiodynamic anodic polarization was investigated. Consistent with the results of discharge rate capability (Figure 11A, B), the presence of sulfide additives was found to considerably modify the passivation characteristics of the iron electrode. When a carbonyl iron electrode without additives was polarized anodically, the current increased in the potential range of -1.00 V to -0.90 V (Figure 12). Polarization of the electrode positive to -0.85 V resulted in a decrease of current. This value of electrode potential where the current begins to decrease with increasing anodic polarization is referred to as the passivation potential ($E_{pass}$) and the corresponding peak current as the passivation current ($I_{pass}$). Since the onset of passivation limits the discharge process, the passivation current is a measure of the maximum discharge rate achievable with the iron electrode. This type of passivation behavior was also exhibited by the iron electrodes containing just bismuth oxide. The value of passivation current observed in the anodic polarization curves corresponded approximately to the maximum discharge rate observed with the carbonyl iron and bismuth oxide electrodes (Figure 11A).

When sulfide is present in the electrolyte, or when iron sulfide is present in the electrode, the polarization measurements did not show any current limitation from passivation. With both these types of sulfide additives, the current continued to increase even when the electrode potential was -0.75V. Thus, with the potentiodynamic polarization studies we were able to confirm directly that sulfide additives mitigated iron electrode passivation. These results on the "de-passivation" of the iron electrode with the sulfide additives are consistent with the high discharge rates of 3C observed (Figure 11B). We also note that the anodic polarization behavior of the iron electrode in the presence of sodium sulfide and iron sulfide was similar to the behavior of a carbonyl iron electrode modified with bismuth sulfide (Figure 12), although significantly higher currents were sustainable with the electrodes containing bismuth oxide and iron sulfide.

The XRD spectrum of the carbonyl iron electrode with bismuth oxide after cycling in the electrolyte containing sodium sulfide, showed the presence of iron sulfides of the formulae, $FeS$, $Fe_3S_4$ and $FeS_2$ (Figure 13) in addition to elemental bismuth. We conclude that these iron sulfides were produced from the reaction of the discharge product, iron (II) hydroxide, with the sulfide ions added to the electrolyte as follows:

$$S^{2-} + Fe(OH)_2 = FeS + 2OH^-$$

The iron (II) sulfide so produced could react further with sulfide ions to form various mixed-valence iron sulfides like $FeS_2$ and $Fe_3S_4$ that are electronically conductive much like iron (II) sulfide. Thus, the presence of an electronically conductive iron sulfide phase was able to mitigate the insulating nature of the passivation layer formed by iron (II) hydroxide.

### Example 3

Pressed plate iron electrodes are prepared by combining high-purity carbonyl iron powder (BASF), specific additives and an alkali stable polymeric binder. The blend is poured into a die carrying a nickel (or nickel-coated) mesh and then formed under heat and pressure into electrodes. The oxide content of the carbonyl iron is in the range of 0.1 to 0.25% for achieving fast rate of formation, high rate capability and high capacity. Figure 14 provides potential-charge curves measured on carbonyl iron electrodes with iron sulfide additive shows the effect of 1% and 5% iron sulfide on discharge properties.

### Example 4

A porosity of 40-60% is achieved by using a pore former additive in the electrode that is dissolved away from the electrode during the first few charge/discharge cycles. The preferred pore-former is potassium carbonate that readily dissolves in the electrolyte leaving behind large pores. A preferred version of the iron electrode has potassium carbonate as the pore former of 10-15%. An electrode with a pore-former, such as potassium carbonate, can achieve a capacity of at least 0.3 Ah/g, compared to an electrode without the pore-former that has a capacity of just 0.1 Ah/g. Figure 15 compares the discharge capacity of iron electrode with and without pore former additive.

### Example 5

High-rate discharge capability is achieved by the addition of sulfides to the pressed plate electrode. As a result, the entire capacity of the electrode can be discharged fast in a third of an hour or termed, alternatively, as the "3C rate". Such high rates of discharge are achieved when iron (II) sulfide is ground finely to be in the range of 20-25 microns in size and distributed uniformly throughout. Figure 16 provides the discharge capacity of a carbonyl iron electrode modified with FeS at different discharge rates. This figure shows a rate capability of 3C achieved with electrodes containing iron sulfide.

### Example 6

High-efficiency in pressed plate electrodes is achieved by using bismuth sulfide or bismuth oxide. These additives are electrochemically reduced to elemental bismuth during charging of the electrode. The elemental bismuth produced by such an *in situ* process is capable of suppressing the electrochemical hydrogen evolution by inhibiting the surface kinetic processes in the formation of hydrogen. Bismuth sulfide and bismuth oxide additives along with carbonyl iron, produce charging efficiencies as high as 95%, a ten-fold reduction in hydrogen evolution over commercial electrodes. Figure 17 is a bar chart that provides a comparison of the relative rates of hydrogen evolution with a carbonyl iron electrode and in the presence of bismuth additives with that of a commercially available iron electrode .

### Example 7

Figure 18 provides a comparison of durability of pressed plate iron electrodes with and without an iron sulfide additive. The discharge capacity of the iron electrode is stable over hundreds of cycles by the addition of iron (II) sulfide. Electrodes containing other sulfides suffer a decrease in discharge capacity with cycling. With the addition of 1-10% of iron sulfide, over 500 cycles can be achieved without any noticeable loss in capacity. After assembly, the iron electrodes are charged and discharged several times before a stable capacity is achieved. This process of repeated cycling before a stable capacity is achieved is termed "formation". The number of "formation" cycles is substantially reduced by use of a pore-former and also the use of iron (II) sulfide. The preferred composition of the electrode with about 10% of pore-former and 1-10% of iron (II) sulfide allows for the rapid formation of the iron electrode in 20-30 cycles. Figure 19 provides a comparison of formation characteristics of carbonyl iron electrode with pore-forming and sulfide additives. It is observed that there is a beneficial effect of the pore-former and sulfide on the formation rate.

### Example 8

Pocket plate iron electrodes are formed from a blended electrode mix of carbonyl iron powder and various additives of the type described above wrapped tightly within a nickel (or nickel-plated) mesh. Such an electrode may be rolled or flattened into structures that constitute pockets that hold the electrode mix. Unlike in the pressed plate electrode, the hot-pressing step is not used to consolidate the electrode materials. Instead, the electrodes are charged and discharged repeatedly during which the electrode materials are transformed and interconnected. Such electrodes are mechanically robust and do not shed any electrode materials. Electrodes of this type are prepared with all the beneficial additives set forth above. Figure 20 provides a plot of the charging capacity versus the number of cycles for a flattened pocket plate iron electrode. Figure 21 provides a plot of the charging capacity for an electrode in which steel wool is included to interconnect the iron particles.

**Example 9**

A sintered iron electrode is prepared by combining carbonyl iron powder (with the low oxide content and particle size in the range of 2-5 microns) with various additives and heated to 850°C for about a half hour in a non-oxidizing atmosphere to form a sintered electrode structure of interconnected iron particles and pores. The temperature range for sintering is 700 to 1000°C, and the sintering time varies with the temperature, 10 minutes to about 2 hours. The electrode mix is spread over a nickel (or nickel coated) mesh placed on a ceramic or heat-resistant plate. During the sintering process, the non-oxidizing gas environment is achieved by using a flow of hydrogen, argon, nitrogen, ammonia or such other non-oxidizing gases. The atmosphere must not have traces of even water or oxygen to avoid the oxidation of the iron particles. The electrodes are cooled below 100°C before they are removed from the sintering environment to avoid further oxidation. Figure 22 provides a plot of the discharge capacity of a sintered electrode.

**Example 10**

A sintered iron electrode may also be formed by a microwave-induced heating process. An electrode blend of carbonyl iron and additives is placed on a ceramic or glass sheet and then subjected briefly to microwave radiation of 2.45 GHz for just 5-15 seconds. The heating caused by microwaves raises the temperature, causing the particles to sinter and form an interconnected structure of particles with pores. Electrodes of this type have been found to charge and discharge repeatedly and show good capacity and rate capability. Figure 23 provides a plot of the discharge capacity for a microwave sintered iron electrode with carbonyl iron. Figure 24 provides a plot of the discharge capacity in which steel wool is also included in the microwave sintered iron electrodes to interconnect the iron particles and serve as a current collector in the electrode.

**Example 11**

Sintered electrodes are formulated with various types of additives which produce the required porosity, reduce passivation, and increase the electrical interconnectivity. Figure 25 provides the discharge capacity of a carbonyl iron electrode modified with 1-5 % FeS at different discharge rates. This figure shows a rate capability of 3C achieved with electrodes containing iron sulfide. In Figure 26, Sintered iron electrode with 1-5% iron (II) sulfide added to the electrode mix was found to undergo formation and rapid charge-discharge cycling over hundreds of cycles during which its high rate capability and high efficiency are sustained.

**Example 12**

A sintered iron electrode with 1-5% iron (II) sulfide and 10% of pore former such as ammonium bicarbonate or ammonium carbonate is found to yield high capacity, high charging efficiency and high discharge rate capability. Figure 27 provides a plot of the discharge capacity for this example having a pore-forming agent.

**Example 13**

A sintered iron electrode containing iron (II) sulfide, pore-former, and carbon additives such as acetylene black, graphite nanofibers and carbon black increase conductivity of the electrode, thus enable the electrode to form rapidly in just one or two cycles, and also present high capacity, high efficiency, high rate capability and long cycle life. Figure 28 provides a plot of the discharge capacity for this example.

**Example 14**

A sintered iron electrode containing iron (II) sulfide, pore-former, and additives that can decompose to form interconnected carbon networks with superior electrical conductivity have been fabricated and tested. Such *in-situ* produced carbon may be obtained by adding inexpensive starch powder as an electrode additive prior to sintering. During sintering, the starch decomposes and creates a carbon network that enhances the rate of formation and increases the capacity of the electrode. Figure 29 provides a plot of the discharge capacity for this example having a pore-forming agent and an in situ carbon additive.

**Example 15**

Sintered electrodes where the amount of pore-former varies in the range of 5-20% to achieve porosity in the range of 40-60 are prepared. The control of the porosity allows the electrode to achieve the required capacity and robustness during charge/discharge cycling. Figure 30 provides a plot of the discharge capacity versus porosity.

**Example 16**

A sintered electrode is formed by sintering using an electrode blend that includes silica micro-beads in the range of 10-25 microns. The sintered iron electrode now is formed with interconnected iron particles surrounding the silica beads. The silica beads are expected to retain their shape even after the sintering process. The sintered electrode containing these silica beads is then immersed in a concentrated solution of potassium hydroxide or similar strongly alkaline medium to dissolve the silica and leave behind pores of the size required to achieve high capacity. Such an electrode is expected to achieve high capacity without compromising on the mechanical robustness. Figure 31 provides a scanning electron micrograph of silica micro-beads.

**Example 17**

A sintered electrode is formed from an electrode blend of carbonyl iron powder, pore-former, additives to reduce passivation, and steel wool to interconnect the iron particles. Such an electrode is found to undergo efficient charge and discharge. Figure 32 provides a plot of the discharge capacity for an electrode prepared from carbonyl iron powder, pore-former, additives to reduce passivation, and steel wool.

**Example 18**

The electrodes set forth above are combined with a rechargeable nickel hydroxide/nickel oxyhydroxide electrode to realize an efficient, high rate, high energy density, and long life, nickel-iron rechargeable battery. A nickel-iron battery that uses a pressed plate iron electrode incorporating the 10% potassium carbonate as the pore-former, 5% iron (II) sulfide as the sulfide additive and 5% bismuth oxide as the additive for achieving high efficiency has been fabricated and tested. The nickel-iron cell in this example was fabricated using a sintered nickel electrode. Such a cell can also be fabricated using foam-type nickel electrode, pocket plate nickel electrodes, fiber plate type nickel electrodes or by using the advanced foam type nickel electrode described later here. This advanced nickel-iron battery has been found to cycle without loss of capacity for over 500 cycles, can be discharged at very high rates of 3C, and has an efficiency greater than 95% without any significant production of hydrogen. Figure 33 provides a plot of discharge capacity for a Ni-Fe Cell with pressed plate carbonyl iron electrode. Figure 34 provides charge-discharge curves from a Ni-Fe cell with carbonyl iron electrode and iron sulfide additive. Figure 35 provides plots for the performance of a Ni-Fe Cell at different discharge rates.

**Example 19**

A nickel-iron battery that uses a sintered iron electrode of the type described above with ammonium carbonate, iron (II) sulfide, and conductive carbon additive, combined with a sintered nickel electrode was shown to have high efficiency, excellent discharge rate capability and long cycle life. Figure 36 provides a plot of the discharge capacity for a sintered iron electrode made from ammonium carbonate, iron (II) sulfide, and conductive carbon additive.

**Example 20**

A new type of nickel foam electrode suitable for a nickel-iron cell with sintered electrode or pressed plated iron electrodes has been developed. Such a nickel electrode can operate in a cell with excess alkaline electrolyte without the shedding of the nickel hydroxide particles. The electrode is fabricated by combining the nickel hydroxide active materials with 5-15% of an alkali stable binder such as hydroxyethylcellulose (Hercules Corporation) and the resulting slurry is coated onto the nickel foam. Such an electrode is then dried at about 85-100°C to remove any of the excess solvent and then subjected to cycling. Such a lightweight electrode offers a nickel iron battery with an energy density as high as 100 Wh/kg and reduces the amount of nickel used in the electrodes leading to a reduction in the cost of the electrode. These electrodes show a high stable capacity and high efficiency. Figure 37 provides a plot of the charge and discharge capacity for this example.

**Example 21**

A nickel foam electrode containing carbon additives, such as acetylene black, graphite nanofibers and carbon black, have been fabricated and tested. The interconnected carbon networks can provide the electrode with superior electrical conductivity, and results in a further increase in utilization rate of the nickel hydroxide active material in the nickel foam electrode. Figure 38 provides a plot of the charge and discharge capacity for a nickel foam electrode containing carbon additives that shows higher utilization rate, high efficiency, good discharge rate capability and stable discharge capacity over more than 100 cycles

**Claims**

1. A battery (10) comprising:

    an iron electrode (26) comprising carbonyl iron composition dispersed over a fibrous electrically conductive substrate, the carbonyl iron composition including carbonyl iron, iron sulfide powder and bismuth oxide powder; a counter-electrode (18, 28) spaced from the iron electrode (26); and an electrolyte (24) in contact with the iron electrode (26) and the counter-electrode (18, 28), wherein during discharge iron in the iron electrode (26) is oxidized with reduction occurring at the counter-electrode (28) such that an electric potential develops.

2. The battery (10) of claim 1 wherein the fibrous electrically conductive substrate includes a plurality of iron-containing filaments.

3. The battery (10) of claim 2 wherein the fibrous electrically conductive substrate is steel wool.

4. The battery (10) of claim 1, further comprising an additive selected from the group consisting of sodium bismuth oxide, bismuth sulfide, copper sulfide, nickel sulfide, zinc sulfide, lead sulfide, mercury sulfide, indium sulfide, gallium sulfide, and tin sulfide.

5. The battery (10) of claim 1, wherein the bismuth oxide powder is present in an amount of 5 weight percent.

6. The battery (10) of claim 1, wherein the iron sulfide powder is present in an amount of from 2 to 8 weight percent of the total weight of the carbonyl iron composition.

7. The battery (10) of claim 1, wherein the carbonyl iron composition includes carbonyl iron particles fused together by sintering with carbonyl iron particles connected by regions of sintered material thereby defining a plurality of interconnected pores wherein the sintering is by thermal, laser, microwave or e-beam sintering.

8. The battery (10) of claim 1 wherein the counter-electrode is an air electrode spaced from the iron electrode.

9. The battery (10) of claim 1 wherein the counter-electrode is a nickel electrode (18) that sustains electrochemical reactions that sustains oxidation and reduction of nickel hydroxide $(Ni(OH)_2)$ and nickel oxyhydroxide (NiOOH).

10. The battery (10) of claim 9 wherein the nickel electrode (18) includes a metal nickel foam that incorporates nickel hydroxide and nickel oxyhydroxide.

11. The battery (10) of claim 1 wherein the iron electrode (26) includes a metallic mesh over which the carbonyl iron composition is disposed.

12. The battery (10) of claim 1 wherein the electrolyte (24) includes a mixture of potassium hydroxide and lithium hydroxide wherein potassium hydroxide is present in an amount of 2.5 to 35 weight percent and lithium hydroxide is present in an amount of 0.1 to 25 weight percent of the total weight of the electrolyte (24).

13. The battery (10) of claim 12 wherein the electrolyte (24) further includes an electrolyte additive selected from the group consisting of sodium sulfide, potassium sulfide, and combinations thereof, the concentration of the electrolyte additive being from 1 to 5 g/l.

**14.** The battery (10) of claim 1 wherein the carbonyl iron composition has a porosity from about 30 to 70 volume percent.

**15.** A method for manufacturing an iron electrode (26) for use in an iron-based rechargeable battery (10), the method comprising:

combining carbonyl iron powder with a bismuth oxide powder and an iron sulfide powder to create an electrode-forming blend;
coating a metallic mesh with the electrode-forming blend; and
sintering the electrode-forming blend under an oxygen-free atmosphere to form the iron electrode (26).

**16.** The method of claim 15 wherein the electrode-forming blend is sintered at a temperature from 700 to 1000°C.

**17.** The method of claim 15 wherein the electrode-forming blend is sintered by microwave radiation.

**18.** The method of claim 15 wherein the metallic mesh includes steel wool.

**19.** The method of claim 17, further comprising an additive is-selected from the group consisting of sodium bismuth oxide, bismuth sulfide, copper sulfide, nickel sulfide, zinc sulfide, lead sulfide, mercury sulfide, indium sulfide, gallium sulfide, and tin sulfide.

**20.** The method of claim 15, wherein the iron sulfide powder is present in an amount of from 2 to 8 weight percent of the combined weight of the carbonyl iron, bismuth oxide powder and iron sulfide powder.

**21.** The method of claim 15 wherein the electrode-forming blend further includes a pore forming agent.

**22.** The method of claim 15 wherein the electrode-forming blend further includes silica micro-beads having an average diameter from about 10 to 25 microns, the silica micro-beads being dissolved to increase the porosity of the iron electrode (26).

**23.** The method of claim 15, wherein the iron sulfide powder is ground finely to be in the range of 20 - 25 microns in size and distributed uniformly throughout the iron electrode (26).

**24.** The battery (10) of claim 1, wherein the iron sulfide powder is present in the iron electrode (26) in a quantity of between 1 weight percent and 10 weight percent.

**25.** The battery (10) of claim 1, wherein the bismuth oxide powder is present in the iron electrode (26) in a quantity of 10 weight percent.

**26.** The battery (10) of claim 1, wherein the iron sulfide powder and the bismuth oxide powder are present in the iron electrode (26) during fabrication of the iron electrode (26).


**Patentansprüche**

**1.** Akkumulator (10), der aufweist:

eine Eisenelektrode (26), die eine Carbonyleisen-Zusammensetzung enthält, die über ein faserförmiges, elektrisch leitendes Substrat verteilt ist, wobei die Carbonyleisen-Zusammensetzung Carbonyleisen, Eisensulfid-Pulver und Bismutoxid-Pulver enthält,
eine Gegenelektrode (18, 28), die von der Eisenelektrode (26) beabstandet ist, und
einen Elektrolyten (24) im Kontakt mit der Eisenelektrode (26) und der Gegenelektrode (18, 28), wobei während der Entladung Eisen in der Eisenelektrode (26) oxidiert wird, während eine Reduktion an der Gegenelektrode (28) stattfindet, so dass sich ein elektrisches Potential ausbildet.

**2.** Akkumulator (10) von Anspruch 1, bei dem das faserförmige, elektrisch leitende Substrat eine Vielzahl von Eisen enthaltenden Filamenten enthält.

**3.** Akkumulator (10) von Anspruch 2, bei dem das faserförmige, elektrisch leitende Substrat Stahlwolle ist.

**4.** Akkumulator (10) von Anspruch 1, der ferner ein Additiv enthält, das aus der Gruppe ausgewählt ist, die besteht aus Natriumbismutat, Bismutsulfid, Kupfersulfid, Nickelsulfid, Zinksulfid, Bleisulfid, Quecksilbersulfid, Indiumsulfid, Galliumsulfid und Zinnsulfid.

**5.** Akkumulator (10) von Anspruch 1, bei dem das Bismutoxid-Pulver in einer Menge von 5 Gew.-% vorliegt.

**6.** Akkumulator (10) von Anspruch 1, bei dem das Eisensulfid-Pulver in einer Menge von 2 bis 8 Gew.-% vorliegt, bezogen auf das Gesamtgewicht der Carbonyleisen-Zusammensetzung.

**7.** Akkumulator (10) von Anspruch 1, bei dem die Carbonyleisen-Zusammensetzung Carbonyleisen-Partikel enthält, die durch Sintern zusammengeschmolzen sind, wobei Carbonyleisen-Partikel durch Bereiche von gesintertem Material verbunden sind, wodurch eine Vielzahl von untereinander verbundenen Poren definiert werden, wobei das Sintern durch thermisches Sintern, Lasersintern, Mikrowellen-Sintern oder Elektronenstrahl-Sintern erfolgt.

**8.** Akkumulator (10) von Anspruch 1, bei dem die Gegenelektrode eine von der Eisenelektrode beabstandete Luftelektrode ist.

**9.** Akkumulator (10) von Anspruch 1, bei dem die Gegenelektrode eine Nickelelektrode (18) ist, die elektrochemischen Reaktionen unterliegt, wobei Oxidation und Reduktion von Nickelhydroxid ($Ni(OH)_2$) und Nickeloxidhydroxid (NiOOH) erfolgen.

**10.** Akkumulator (10) von Anspruch 9, bei dem die Nickelelektrode einen Schaum aus metallischem Nickel enthält, in dem Nickelhydroxid und Nickeloxidhydroxid eingelagert sind.

**11.** Akkumulator (10) von Anspruch 1, bei dem die Eisenelektrode (26) ein metallisches Netz enthält, über dem die Carbonyleisen-Zusammensetzung angeordnet ist.

**12.** Akkumulator (10) von Anspruch 1, bei dem der Elektrolyt (24) ein Gemisch von Kaliumhydroxid und Lithiumhydroxid enthält, wobei Kaliumhydroxid in einer Menge von 2,5 bis 35 Gew.-% vorliegt und Lithiumhydroxid in einer Menge von 0,1 bis 25 Gew.-% vorliegt, bezogen auf das Gesamtgewicht des Elektrolyten (24).

**13.** Akkumulator (10) von Anspruch 12, bei dem der Elektrolyt (24) ferner ein Elektrolyt-Additiv enthält, das aus der Gruppe ausgewählt ist, die aus Natriumsulfid, Kaliumsulfid und Kombinationen davon besteht, wobei die Konzentration des Elektrolyt-Additivs 1 bis 5 g/l beträgt.

**14.** Akkumulator (10) von Anspruch 1, bei dem die Carbonyleisen-Zusammensetzung eine Porosität von etwa 30 bis 70 Vol.-% besitzt.

**15.** Verfahren zur Herstellung einer Eisenelektrode (26) zur Verwendung in einem wiederaufladbaren Akkumulator (10) auf Eisenbasis, wobei das Verfahren umfasst:

Vereinigen von Carbonyleisen-Pulver mit einem Bismutoxid-Pulver und einem Eisensulfid-Pulver zur Erzeugung eines Gemisches zur Elektrodenherstellung;
Beschichten eines metallischen Netzes mit dem Gemisch zur Elektrodenherstellung und
Sintern des Gemisches zur Elektrodenherstellung unter einer sauerstofffreien Atmosphäre unter Bildung der Eisenelektrode (26).

**16.** Verfahren von Anspruch 15, bei dem das Gemisch zur Elektrodenherstellung bei einer Temperatur von 700 bis 1000 °C gesintert wird.

**17.** Verfahren von Anspruch 15, bei dem das Gemisch zur Elektrodenherstellung durch Mikrowellenstrahlung gesintert wird.

**18.** Verfahren von Anspruch 15, bei dem das metallische Netz Stahlwolle umfasst.

**19.** Verfahren von Anspruch 17, das ferner ein Additiv umfasst, das aus der Gruppe ausgewählt ist, die besteht aus Natriumbismutat, Bismutsulfid, Kupfersulfid, Nickelsulfid, Zinksulfid, Bleisulfid, Quecksilbersulfid, Indiumsulfid, Galliumsulfid und Zinnsulfid.

**20.** Verfahren von Anspruch 15, bei dem das Eisensulfid-Pulver in einer Menge von 2 bis 8 Gew.-% vorliegt, bezogen auf das Gesamtgewicht des Carbonyleisens, des Bismutoxid-Pulvers und des Eisensulfid-Pulvers.

**21.** Verfahren von Anspruch 15, bei dem das Gemisch zur Elektrodenherstellung ferner ein porenbildendes Mittel enthält.

**22.** Verfahren von Anspruch 15, bei dem das Gemisch zur Elektrodenherstellung ferner Siliciumdioxid-Mikrokügelchen mit einem mittleren Durchmesser von etwa 10 bis 25 μm enthält, wobei die Siliciumdioxid-Mikrokügelchen aufgelöst werden, um die Porosität der Eisenelektrode (26) zu erhöhen.

**23.** Verfahren von Anspruch 15, bei dem das Eisensulfid-Pulver zu einer Größe im Bereich von 20 bis 25 μm fein gemahlen und in der ganzen Eisenelektrode (26) gleichmäßig verteilt wird.

**24.** Akkumulator (10) von Anspruch 1, bei dem das Eisensulfid-Pulver in der Eisenelektrode (26) in einer Menge von 1 bis 10 Gew.-% vorliegt.

**25.** Akkumulator (10) von Anspruch 1, bei dem das Bismutoxid-Pulver in der Eisenelektrode (26) in einer Menge von 10 Gew.-% vorliegt.

**26.** Akkumulator (10) von Anspruch 1, bei dem das Eisensulfid-Pulver und das Bismutoxid-Pulver während der Herstellung der Eisenelektrode (26) in der Eisenelektrode (26) vorliegen.


**Revendications**

**1.** Batterie (10) comprenant :

une électrode ferreux (26) comprenant une composition de fer carbonylé disséminée sur un substrat électriquement conducteur fibreux, la composition de fer carbonylé incluant du fer carbonylé, de la poudre de sulfure de fer et de la poudre d'oxyde de bismuth ;
une contre-électrode (18, 28) placée à distance de l'électrode ferreux (26) ; et
un électrolyte (24) en contact avec l'électrode ferreux (26) et la contre-électrode (18, 28) dans laquelle pendant la décharge le fer de l'électrode ferreux (26) est oxydé avec une réduction se produisant sur la contre-électrode (28) de façon à ce qu'un potentiel électrique se développe.

**2.** Batterie (10) selon la revendication 1,
dans laquelle le substrat électriquement conducteur fibreux inclut une série de filaments contenant du fer.

**3.** Batterie (10) selon la revendication 2,
dans laquelle le substrat électriquement conducteur fibreux est en laine d'acier.

**4.** Batterie (10) selon la revendication 1,
comprenant en outre un additif choisi dans un groupe composé de bismuthate de sodium, de sulfure de bismuth, de sulfure de cuivre, de sulfure de nickel, de sulfure de zinc, de sulfure de plomb, de sulfure de mercure, de sulfure d'indium, de sulfure de gallium et de sulfure d'étain.

**5.** Batterie (10) selon la revendication 1,
dans laquelle la poudre d'oxyde de bismuth est présente dans une proportion de 5 pour cent de la masse.

**6.** Batterie (10) selon la revendication 1,
dans laquelle la poudre de sulfure de fer est présente dans une proportion comprise entre 2 et 8 pour cent de la masse totale de la composition de fer carbonylé.

**7.** Batterie (10) selon la revendication 1,
dans laquelle la composition de fer carbonylé inclut des particules de fer carbonylé fusionnées ensemble par frittage avec les particules de fer carbonylé reliées par zones de matière frittée, définissant ainsi une série de pores interconnectés dans laquelle le frittage est fait par frittage thermique, laser, par micro-ondes ou par faisceau d'électrons.

**8.** Batterie (10) selon la revendication 1,

dans laquelle la contre-électrode est une électrode utilisant l'oxygène de l'air placée à distance de l'électrode ferreux.

9. Batterie (10) selon la revendication 1,
dans laquelle la contre-électrode est une électrode en nickel (18) qui réagit selon des réactions électrochimiques et subit une oxydation et une réduction de l'hydroxyde de nickel ($Ni(OH)_2$) et de l'oxyhydroxyde de nickel ($NiO(OH)$).

10. Batterie (10) selon la revendication 9,
dans laquelle l'électrode en nickel (18) inclut une mousse de nickel métallique qui contient de l'hydroxyde de nickel et de l'oxyhydroxyde de nickel.

11. Batterie (10) selon la revendication 1,
dans laquelle l'électrode ferreux (26) inclut un maillage métallique sur lequel la composition de fer carbonylé est disposée.

12. Batterie (10) selon la revendication 1,
dans laquelle l'électrolyte (24) inclut un mélange d'hydroxyde de potassium et d'hydroxyde de lithium dans lequel l'hydroxyde de potassium est présent dans une proportion de 2,5 à 35 pour cent et l'hydroxyde de lithium est présent dans une proportion de 0,1 à 25 pour cent de la masse totale de l'électrolyte (24).

13. Batterie (10) selon la revendication 12,
dans laquelle l'électrolyte (24) comprend en outre un additif d'électrolyte choisi dans un groupe composé de sulfure de sodium, de sulfure de potassium et d'une combinaison de ces derniers, la concentration de l'additif d'électrolyte étant de 1 à 5 g/l.

14. Batterie (10) selon la revendication 1,
dans laquelle la combinaison de fer carbonylé présente une porosité d'environ 30 à 70 pour cent du volume.

15. Procédé pour la fabrication d'une électrode ferreux (26) pour usage dans une batterie (10) rechargeable au fer, le procédé comprenant de:

combiner une poudre de fer carbonylé avec une poudre d'oxyde de bismuth et une la poudre de sulfure de fer pour fabriquer un mélange formant une électrode ;
enduire un maillage métallique avec le mélange formant une électrode ; et
fritter le mélange formant une électrode sous une atmosphère sans oxygène pour former l'électrode ferreux (26).

16. Procédé selon la revendication 15,
dans lequel le mélange formant une électrode est fritté à une température comprise entre 700 à 1000°C.

17. Procédé selon la revendication 15,
dans lequel le mélange formant une électrode est fritté par rayonnement aux micro-ondes.

18. Procédé selon la revendication 15,
dans lequel le maillage métallique inclut une laine d'acier.

19. Procédé selon la revendication 17,
comprenant en outre un additif choisi dans un groupe composé de : bismuthate de sodium, sulfure de bismuth, sulfure de cuivre, sulfure de nickel, sulfure de zinc, sulfure de plomb, sulfure de mercure, sulfure d'indium, sulfure de gallium et sulfure d'étain.

20. Procédé selon la revendication 15,
dans lequel la poudre de sulfure de fer est présente dans une proportion de 2 à 8 pour cent de la masse combinée du fer carbonylé, de la poudre d'oxyde de bismuth et de la poudre de sulfure de fer.

21. Procédé selon la revendication 15,
dans lequel le mélange formant une électrode inclut en outre un agent permettant la formation de pores.

22. Procédé selon la revendication 15,
dans lequel le mélange formant une électrode inclut en outre des microbilles de silice ayant un diamètre moyen d'environ 10 à 25 microns, les microbilles de silice étant dissoutes afin d'augmenter la porosité de l'électrode ferreux (26).

23. Procédé selon la revendication 15,
dans lequel la poudre de sulfure de fer est finement broyée afin d'obtenir une taille comprise entre 20 et 25 microns et est uniformément répartie sur l'électrode ferreux (26).

24. Batterie (10) selon la revendication 1,
dans laquelle la présence de poudre de sulfure de fer dans l'électrode ferreux (26) représente une quantité de 1 à 10 pour cent de la masse.

25. Batterie (10) selon la revendication 1,
dans laquelle la poudre d'oxyde de bismuth est présente dans l'électrode ferreux (26) en une quantité de 10 pour cent de la masse.

26. Batterie (10) selon la revendication 1,
dans laquelle la poudre de sulfure de fer et la poudre d'oxyde de bismuth sont présentes dans l'électrode ferreux (26) lors de la fabrication de l'électrode ferreux (26).

**EP 3 050 152 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8758948 B